# EUROPÄISCHE PATENTSCHRIFT

(11) **EP 0 753 457 B1**
(45) Veröffentlichungstag und Bekanntmachung des Hinweises auf die Patenterteilung: **16.10.2002**
(21) Anmeldenummer: 96111113.5
(22) Anmeldetag: 10.07.1996
(51) Int. Cl.: B64D 9/00, B64C 1/20

(54) **Riegelelement**
Locking member
Elément de verrouillage

(30) Priorität: 12.07.1995 DE 19525392
(43) Veröffentlichungstag der Anmeldung: 15.01.1997
(73) Patentinhaber: Telair International GmbH, 83734 Hausham (DE)
(72) Erfinder: Huber, Thomas, 82393 Iffeldorf (DE)
(74) Vertreter: Bohnenberger, Johannes, Dr.

(56) Entgegenhaltungen:
- DE-A- 4 113 242
- DE-A- 4 216 413
- DE-C- 4 224 819
- DE-C- 4 224 820

## Beschreibung

Die Erfindung betrifft ein Riegelelement zum Sichern eines Containers auf einem Prachtraumboden eines Flugzeuges nach dem Oberbegriff des Patentanspruchs 1.

Container werden am Boden des Frachtraums eines Flugzeugs durch Riegelelemente gehalten, wobei die dort vorgesehenen Haken eingeklappt werden können, damit man den nur von einer Seite zugänglichen Frachtraum nach und nach befüllen kann.

Wenn nun das Bedienungspersonal unvorsichtig ist bzw. unsorgfältig arbeitet - was auch aufgrund des zeitlichen Druckes beim Be- und Entladen immer wieder geschieht -, kommt es vor, daß sich der Haken eines Riegelelements in der hochgeklappten Position befindet, während ein Container in den Frachtraum hineingefahren wird. Dann fährt der Container auf den hochgeklappten Haken in einer Richtung senkrecht zur Verschwenkebene des Hakens auf. Dadurch können das Riegelelement und - was noch viel schlimmer ist - die Bodenstruktur des Flugzeugs beschädigt werden, was lange Standzeiten und enorm hohe Reparaturkosten mit sich bringt.

Aus der DE 42 24 819 C1 oder der DE 42 24 820 C1 ist ein Riegelelement der eingangs genannten Art bekannt, das aufgrund der Struktur seines Rahmens gewisse Elastizitätseigenschaften zum Auffangen von Schlägen und Stößen aufweist. Die von diesem Riegelelement aufnehmbaren Schläge und Stöße dürfen jedoch im wesentlichen nur in der Schwenkebene auf den Haken wirken, so daß das hier vorliegende Problem durch dieses Riegelelement nicht gelöst werden kann.

Der Erfindung liegt die Aufgabe zugrunde, ein Riegelelement aufzuzeigen, das bei einem quer zur Schwenkebene des Hakens auffahrenden Container selbst nicht zerstört wird und auch eine Zerstörung der Bodenstruktur verhindert.

Diese Aufgabe wird durch ein Riegelelement nach Patentanspruch 1 gelöst.

Ein wesentlicher Punkt der Erfindung besteht darin, daß man bewußt einen Grenzwert für die Belastbarkeit des Riegelelements zumindest in einer bestimmten Richtung vorsieht, wobei dieser Grenzwert unterhalb des Wertes liegt, bei welchem eine dauerhafte Beschädigung des Riegelelements und insbesondere der Bodenstruktur auftritt.

Die Sicherungseinrichtungen können nun beispielsweise im Rahmen selbst derart angebracht sein, daß sich der Haken bei einem Auffahren des Containers und einer dadurch erzeugten Überlast wegdreht oder wegklappt. Besonders einfach ist es jedoch, die Sicherungseinrichtungen an oder in den Befestigungseinrichtungen vorzusehen, wodurch gewährleistet wird, daß man verschiedenartige Riegelelemente mit ein und denselben Befestigungseinrichtungen mit Sicherungseinrichtungen am Frachtraumboden befestigen kann.

Vorzugsweise werden die Sicherungseinrichtungen derart ausgebildet, daß ein Ausweichen des Riegelelements nur bei einer genau definierten Überlast gewährleistet ist. Besonders vorteilhaft ist es, wenn auch die Richtung festgelegt wird, in welcher die Überlast auftreten muß, damit die Sicherungseinrichtungen wirksam werden. Insbesondere ist dies eine Richtung, die im wesentlichen parallel zur Achse verläuft, um welche der Haken verschwenkt wird. Die Überlastung muß also in einer Richtung senkrecht zur Verschwenkebene des Hakens auftreten, damit die Sicherungseinrichtung wirksam wird. Dadurch ist es möglich, die Sicherungseinrichtungen bereits bei einer Last wirksam werden zu lassen, die erheblich geringer ist als die Last, die der Haken beim Halten eines Containers aufnehmen muß. Diese "Normallast" wirkt nämlich im wesentlichen in Richtungen senkrecht zur Schwenkachse des Hakens, also senkrecht zu der Richtung, in welcher die zu vermeidenden Überlastungskräfte wirken.

Es wäre nun möglich, die Sicherungseinrichtungen derart auszubilden, daß das Riegelelement bei Überlastung nur teilweise fortkippt. Vorzugsweise werden aber die Sicherungseinrichtungen derart ausgebildet, daß das Riegelelement bei Überlastung vollständig freigegeben wird. Bei einer besonders einfach herzustellenden Ausführungsform der Erfindung umfassen hierbei die Sicherungseinrichtungen Sollbruchstellen an Teilen, die leicht und billig auswechselbar sind.

Wenn die Befestigungseinrichtungen für die Riegelelemente Befestigungsbolzen sind, so können die Sicherungseinrichtungen Sollbruchstellen, insbesondere Kerben und Bohrungen mit umfassen, welche die Haltekraft der Bolzen herabsetzen.

Bevorzugte Ausführungsformen der Erfindung ergeben sich aus den Unteransprüchen.

Nachfolgend wird die Erfindung anhand von Zeichnungen eines Ausführungsbeispiels näher erläutert. Hierbei zeigen
- Fig. 1: eine Seitenansicht eines Riegelelements mit hochgeklapptem Riegelhaken,
- Fig. 2: eine perspektivische Ansicht eines Doppel-Riegelelements mit einem besonderen Rahmen,
- Fig. 3: den Rahmen des Riegelelements nach Fig. 2,
- Fig. 4: eine Schnittansicht durch ein Riegelelement gemäß Fig. 2, und
- Fig. 5: eine vergrößerte Schnittdarstellung eines Haltebolzens des in Fig. 4 gezeigten Riegelelements.

Bei der nachfolgenden Beschreibung werden für gleiche und gleichwirkende Teile dieselben Bezugsziffern verwendet.

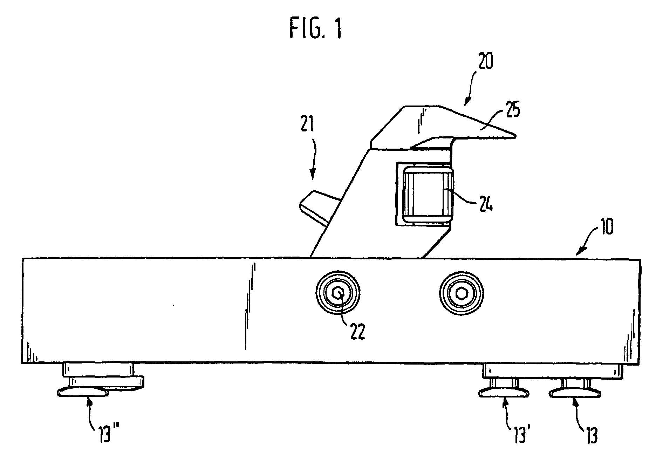

In Fig. 1 ist ein Riegelelement in einer Seitenansicht gezeigt, wobei die Zeichenebene der Ebene entspricht, in welcher ein Riegelhaken 20 um seine Schwenkachse 22 verschwenkt werden kann, die in einem Rahmen 10 befestigt ist. Der Rahmen 10 kann über drei Befestigungsbolzen 13, 13', 13'' in Halteschienen befestigt werden, die üblicherweise im Boden eines Frachtraumes eines Flugzeugs angeordnet sind.

Der Rasthaken 20 ist mit einem oberen Hakendeckel 25 versehen, der in der Horizontalebene verschwenkbar ist. Diese Verschwenkbarkeit ist ein weiterer Schutz des Riegelhakens 20 vor Beschädigung und zwar dann, wenn ein Container in einer Richtung senkrecht zur Zeichenebene der Fig. 1, also parallel zur Schwenkachse 22 an den auskragenden Teil des Hakenteils 25 stößt. Dieser klappt dann fort. Weiterhin ist zum Schutz vor Beschädigungen bei Belastung in der genannten Richtung ein Paar von Abweisrollen 24 (in Fig. 1 ist nur eine zu sehen) am Rasthaken 20 vorgesehen.

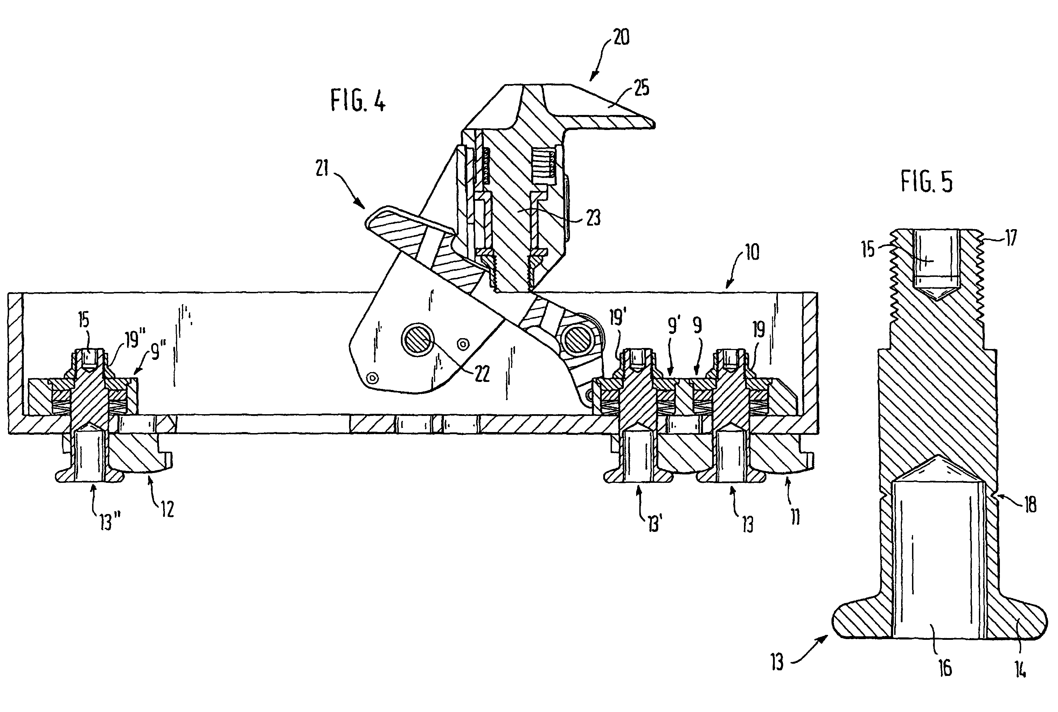

Der Riegelhaken 20 wird von einem Arretierhebel 21 gehalten, dessen Positionierung in Fig. 1 und insbesondere in Fig. 4 zu sehen ist. Diese Konstruktion ist seit langer Zeit bekannt.

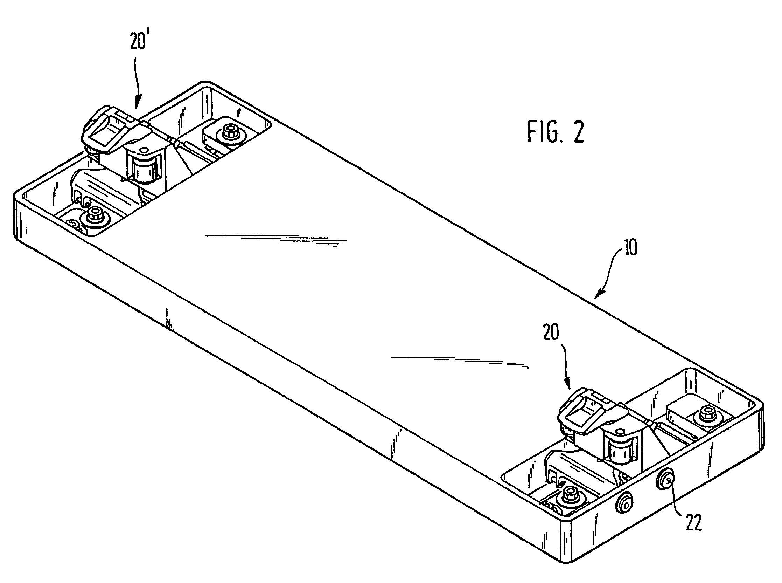

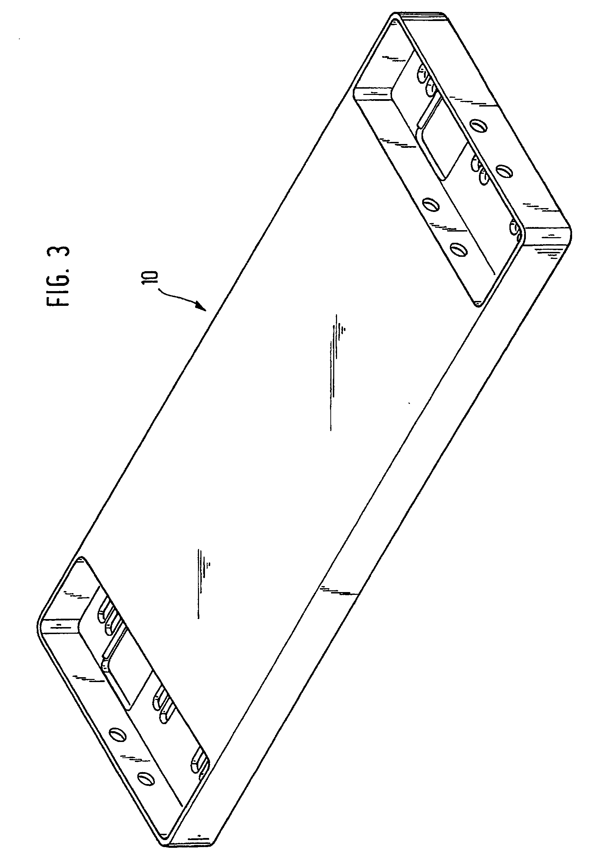

Bei einer auf einen besonderen Flugzeugtyp angepaßten Ausführungsform ist ein Paar von derartigen Riegelelementen mit Rasthaken 20, 20' in einem Rahmen 10 befestigt, wie dies aus den Fig. 2 und 3 hervorgeht. Dieser Aufbau mit einem sehr breiten Rahmen 10 stellt sicher, daß - im Gegensatz zu einem schmalen Riegelelement gemäß der eingangs genannten DE 42 24 820 C1 - bei einem seitlichen Auffahren eines Containers in Richtung der Achse 22 auf einen hochgestellten Rasthaken 20 kein allzugroßes Biege- bzw. Kippmoment auf die Befestigung in der Bodenstruktur wirkt.

Die Befestigung des Riegelelements geht genauer aus den Fig. 4 und 5 hervor.

Die in Fig. 4 gezeigte Schnittzeichnung zeigt neben den schon eingangs erläuterten Strukturen insbesondere die Befestigungseinrichtungen, mit welchen das Riegelelement in den Haltestrukturen des Frachtraumbodens befestigt wird.

Diese Befestigungseinrichtungen umfassen eine vordere Fußplatte 1 und eine hintere Fußplatte 12, welche den besonderen Bodenschienen eines Flugzeugtyps angepaßt sind. Bei anderen Flugzeugtypen sind selbstverständlich andere (oder keine) Fußplatten vorgesehen.

Weiterhin umfassen die Befestigungseinrichtungen die Befestigungsbolzen 13, welche einen unteren Verriegelungskopf 14, der in Fig. 5 gezeigt ist, und ein oben angeordnetes Gewinde 17 umfassen, auf welches Muttern 19 aufschraubbar sind. Die Muttern 19 drücken auf Rasteinrichtungen 9, 9' und 9", wobei die Befestigungsbolzen 13 durch Einsetzen eines Sechskantschlüssels in einen Innensechskant 15 verdreht werden können. Dieser "Schnellverschluß" ist aus der DE 42 16 413 A1 bekannt.

Der Befestigungsbolzen 13 ist nun so ausgebildet, daß er bei einer definierten Last in einem bestimmten Bereich abreißt. Die "Sollbruchstelle" ist durch eine Kerbe 18 vorgegeben, die bei der hier gezeigten Ausführungsform im Bereich der Grenzlinie zwischen dem Rahmen 10 und den Fußplatten 11, 12 liegt. Die Kraft, bei welcher die Sollbruchstelle wirksam wird, ist durch den Durchmesser einer Innenbohrung 16 und die Tiefe der Kerbe 18 definiert, die zusammen die Wandstärke im Bereich der Sollbruchstelle festlegen.

Die Kerbe 18 ist bei der in Fig. 5 gezeigten Ausführungsform umlaufend in die Außenfläche des Befestigungsbolzens 13 eingestochen. Bei der in Fig. 4 gezeigten Ausführungsform sieht man die Kerbe 18 nicht. Dies rührt daher, daß bei der dort gezeigten Ausführungsform zwei einander gegenüberliegende Kerben mit einer Ausrichtung parallel zur Zeichenebene vorgesehen sind, so daß ein Öffnen dieser Sicherungseinrichtungen bzw. Brechen der Sollbruchstellen insbesondere dann erfolgt, wenn eine Kraft senkrecht zur Zeichenebene in Fig. 4 auf den Rasthaken 20, also parallel zur Achse 22 und senkrecht zur Verschwenkrichtung des Rasthakens 20, wirkt. Dann, wenn die Kraft in einer anderen Richtung wirkt, liegt nur eine wesentlich geringere Schwächung des Bolzens 13 vor, da die maximal belasteten Stellen des Bolzens kerbenfrei sind.

Es sei an dieser Stelle auch ausdrücklich erwähnt, daß man anstelle von Sollbruchstellen auch andere, vorzugsweise reversible Öffnungsmechanismen vorsehen kann, die dazu führen, daß bei Auftreffen eines Containers auf den Rasthaken 20 in eine Richtung parallel zur Achse 22 das Riegelelement von der Haltestruktur freigegeben wird.

### Bezugszeichenliste

- 9: Rasteinrichtung
- 10: Rahmen
- 11: vordere Fußplatte
- 12: hintere Fußplatte
- 13: Befestigungsbolzen
- 14: Verriegelungskopf
- 15: Innensechskant
- 16: Bohrung
- 17: Gewinde
- 18: Kerbe
- 19: Mutter
- 20: Rasthaken
- 21: Arretierhebel
- 22: Schwenkachse
- 23: Drehachse
- 24: Abweisrolle
- 25: Hakendeckel

## Patentansprüche

1. Riegelelement zum Sichern eines Containers auf einem Frachtraumboden eines Flugzeugs, umfassend
- einen Rahmen (10),
- mindestens einen Riegelhaken (20), der am Rahmen (10) von einer abgesenkten Ruheposition in eine hochgestellte Arbeitsposition um eine Achse (22) verschwenkbar angebracht ist, und
- Befestigungseinrichtung (9, 12, 13) zum Befestigen des Rahmens (10) in Schienen im Boden des Frachtraums,
**dadurch gekennzeichnet, daß**
Sicherungseinrichtungen (16, 18) vorgesehen sind, die erst bei einer definierten Überlastung des Riegelelements in einer Richtung parallel zum Frachtraumboden das Riegelelement ausweichen lassen.

2. Riegelelement nach Anspruch 1,
**dadurch gekennzeichnet, daß**
die Sicherungseinrichtungen (16, 18) an oder in den Befestigungseinrichtungen (9, 12, 13) vorgesehen sind.

3. Riegelelement nach einem der vorhergehenden Ansprüche,
**dadurch gekennzeichnet, daß**
die Sicherungseinrichtungen (16, 18) derart ausgebildet sind, daß ein Ausweichen des Riegelelements nur bei definierter Überlastung in einer Richtung im wesentlichen parallel zur Achse (22) ermöglicht wird.

4. Riegelelement nach einem der vorhergehenden Ansprüche,
**dadurch gekennzeichnet, daß**
die sicherungseinrichtungen (16, 18) bei Überlastung das Riegelelement vollständig freigeben.

5. Riegelelement nach Anspruch 4,
**dadurch gekennzeichnet, daß**
die Sicherungseinrichtungen (16, 18) Sollbruchstellen umfassen.

6. Riegelelement nach Anspruch 5,
**dadurch gekennzeichnet, daß**
die Sicherungseinrichtungen Sollbruchstellen, insbesondere Kerben (18) und/oder Kernbohrungen (16) in Befestigungsbolzen (13) umfassen, durch welche der Rahmen (10) in den Schienen befestigt ist.

## Claims

1. A locking member for securing a container on a cargo-hold floor of an aeroplane, comprising
- a frame (10),
- at least one locking hook (20) which is attached to the frame (10) in such a way as to be swivellable about an axis (22) from a lowered resting position to an elevated operating position, and
- fastening means (9, 12, 13) for fastening the frame (10) in rails in the floor of the cargo hold,
**characterised in that** safety means (16, 18) are provided, which allow deviation of the locking member in a direction parallel to the cargo-hold floor only in the event of defined overloading of the locking member.

2. A locking member according to Claim 1,
**characterised in that** the safety means (16, 18) are provided on or in the fastening means (9, 12, 13).

3. A locking member according to one of the preceding claims,
**characterised in that** the safety means (16, 18) are designed in such a way that deviation of the locking member is only made possible in the event of defined overloading in a direction substantially parallel to the axis (22).

4. A locking member according to one of the preceding claims,
**characterised in that** the safety means (16, 18) release the locking member fully in the event of overloading.

5. A locking member according to Claim 4,
**characterised in that** the safety means (16, 18) comprise break points.

6. A locking member according to Claim 5,
**characterised in that** the safety means comprise break points, in particular notches (18) and/or core bores (16) in fastening bolts (13) by which the frame (10) is fastened in the rails.

## Revendications

1. Élément de verrouillage pour immobiliser un conteneur sur le sol d'une soute à fret d'un avion, comprenant :
- un cadre (10),
- au moins un crochet de verrouillage (20) qui est rapporté sur le cadre (10) de manière pivotante autour d'un axe (22), d'une position de repos baissée à une position de travail relevée, et
- un dispositif de fixation (9, 12, 13) pour fixer le cadre (10) dans des rails dans le sol de la soute,
**caractérisé en ce que** des dispositifs d'immobilisation (16, 18) sont prévus, qui ne permettent à l'élément de verrouillage de se libérer qu'en cas de surcharge définie de l'élément de verrouillage dans une direction parallèle au sol de la soute.

2. Élément de verrouillage selon la revendication 1, **caractérisé en ce que** les dispositifs d'immobilisation (16, 18) sont prévus sur ou dans les dispositifs de fixation (9, 12, 13).

3. Élément de verrouillage selon l'une des revendications précédentes, **caractérisé en ce que** les dispositifs d'immobilisation (16, 18) sont conformés en sorte qu'une libération de l'élément de verrouillage ne soit possible qu'en cas de surcharge définie dans une direction pour l'essentiel parallèle à l'axe (22).

4. Élément de verrouillage selon l'une des revendications précédentes, **caractérisé en ce que** les dispositifs d'immobilisation (16, 18) libèrent entièrement l'élément de verrouillage en cas de surcharge.

5. Élément de verrouillage selon la revendication 4, **caractérisé en ce que** les dispositifs d'immobilisation (16, 18) comprennent des zones de rupture imposée.

6. Élément de verrouillage selon la revendication 5, **caractérisé en ce que** les dispositifs d'immobilisation comprennent des zones de rupture imposée, en particulier des entailles (18) et/ou des carottages (16) dans des boulons de fixation (13), par lesquels le cadre (10) est fixé dans les rails.
